# EUROPÄISCHE PATENTANMELDUNG

(11) **EP 2 799 277 A2**
(43) Veröffentlichungstag der Anmeldung: **05.11.2014**
(21) Anmeldenummer: 14166561.2
(22) Anmeldetag: 30.04.2014
(51) Int. Cl.: B60M 1/34, E01B 25/22, H02G 5/04, B61B 13/04, B66C 7/00

(54) **Stromlaufschiene und Stromlaufschienensystem**

(30) Priorität: 03.05.2013 DE 102013104525
(71) Anmelder: Heinrich GmbH, 72622 Nürtingen-Zizishausen (DE)
(72) Erfinder: Greiner, Wolfgang, 72622 Nürtingen (DE)
(74) Vertreter: Kohler Schmid Möbus

(57) **Zusammenfassung**

Eine Stromlaufschiene (1, 1') mit einer Laufwagenführung (2, 2') für einen Laufwagen (50) weist zumindest eine elektrisch isoliert zur Laufwagenführung (2, 2') angeordnete Stromschiene (3, 3'), die für einen Stromabnehmer (65) zugänglich ist, auf.

## Beschreibung

Die Erfindung betrifft eine Stromlaufschiene und ein Stromlaufschienensystem mit zumindest einer erfindungsgemäßen Stromlaufschiene.

In der Fleischwarenindustrie, vor allem in mittelständischen Betrieben, wird nicht in großen Hallen produziert, sondern in Räumen mit Unterbauten und Säulen, welche ein Hallenkransystem nicht zulassen. Allerdings weisen Produktionsmaschinen häufig eine Befüllhöhe von bis zu 1,60 m auf. Behälter, die im Bereich von 30 - 40 kg wiegen, müssen bislang manuell gehoben werden, um die Maschinen zu befüllen. Wünschenswert ist daher ein flexibel aufzubauendes Hebelsystem, mit dem an verschiedenen Positionen, nämlich immer dort, wo eine Produktionsmaschine, Waage oder dergleichen steht, Lasten gehoben werden können. Erschwerend kommt in der Fleischwarenindustrie dazu, dass aufgrund von Dämpfen und Reinigungsmitteln in den Produktionsräumen ein hoher Feuchtigkeitsgrad herrscht.

Aufgabe der vorliegenden Erfindung ist es daher, eine Stromlaufschiene und ein Stromlaufschienensystem bereitzustellen, mit denen in einer feuchten Umgebung Lasten elektrisch unterstützt transportiert werden können.

Gelöst wird diese Aufgabe gemäß einem ersten Aspekt der Erfindung durch eine Stromlaufschiene mit einer Laufwagenführung für einen Laufwagen und zumindest einer elektrisch isoliert zur Laufwagenführung angeordneten Stromschiene, die für einen Stromabnehmer zugänglich ist. Über den Laufwagen, der auf der Laufwagenführung geführt werden kann, können Lasten gehoben, aufgenommen und transportiert werden. Während der Laufwagen entlang der Laufschiene bewegt wird, kann unmittelbar von der Stromlaufschiene, nämlich der Stromschiene an der Laufwagenführung Strom abgenommen werden. Eine störende Verkabelung ist daher nicht notwendig. Dies erlaubt ein flexibleres Bewegen des Laufwagens entlang der Stromlaufschiene. Die Stromlaufschiene muss demnach so ausgebildet sein, dass sie eine ausreichende Stabilität aufweist, um auch als Führung für den Laufwagen und insbesondere zur Aufnahme von Lasten zu dienen. Dadurch, dass die Stromschiene an der Stromlaufschiene isoliert angeordnet ist, steht die Laufwagenführung selbst nicht unter Strom. Außerdem werden Kurzschlüsse in einer feuchten Umgebung dadurch verhindert, dass die Stromschiene elektrisch isoliert angeordnet ist. Vorzugsweise ist die Laufwagenführung aus Edelstahl ausgebildet. Somit ist sie besonders resistent gegenüber Dämpfen und Reinigungsmitteln.

Besondere Vorteile ergeben sich, wenn die Laufwagenführung rohrartig ausgebildet ist, die zumindest eine Stromschiene im Innenraum der rohrartigen Laufwagenführung angeordnet ist und die Laufwagenführung einen Längsschlitz aufweist, durch den die zumindest eine Stromschiene für einen Stromabnehmer zugänglich ist. Wenn die Laufwagenführung rohrartig ausgebildet ist, weist sie eine noch höhere Stabilität auf und ist somit geeignet, Laufwagen mit noch größeren Lasten abzustützen. Die rohrartige Ausführung ermöglicht es außerdem, die Stromschiene geschützt im Innenraum der rohrartigen Laufwagenführung anzuordnen. Grundsätzlich ist es denkbar, an der Stromlaufschiene zwei Stromschienen vorzusehen, eine für positives und eine für negatives Potential. In diesem Fall müssten entsprechend zwei Stromabnehmer vorgesehen sein.

Gemäß einer bevorzugten Weiterbildung kann vorgesehen sein, dass die rohrartige Laufwagenführung einen vieleckigen, insbesondere viereckigen, Querschnitt aufweist. In der Ausführungsform mit einem viereckigen Querschnitt kann die Laufwagenführung so angeordnet sein, dass jeweils eine Kante oben und unten angeordnet ist. Dadurch ergibt sich eine besonders gute Führung für die Laufrollen eines Laufwagens. Dabei können Laufrollen sowohl oben als auch unten an der Laufwagenführung anliegen bzw. abrollen.

Weitere Vorteile ergeben sich, wenn der Längsschlitz an der linken oder rechten Längsseite der Laufwagenführung, insbesondere im Bereich einer Kante der Laufwagenführung, angeordnet ist. Somit kann ein Stromabnehmer seitlich in die rohrförmige Laufwagenführung ragen, um die Stromschiene zu kontaktieren. Oben und unten an der Laufwagenführung können sich die Laufrollen des Laufwagens abstützen.

Weitere Vorteile bezüglich der elektrischen Sicherheit als auch bezüglich der Stabilität ergeben sich, wenn der Innenraum der Laufwagenführung mit einem elektrisch isolierenden Kernmaterial ausgefüllt ist, in das die zumindest eine Stromschiene eingebettet ist. Es versteht sich, dass das Kernmaterial im Bereich des Längsschlitzes ebenfalls geschlitzt ausgeführt ist, sodass die Stromschiene nach wie vor durch einen Stromabnehmer zugänglich ist. Das Kernmaterial kann dabei beispielsweise aus Polypropylen (PP), PVC oder aus einem PU-Schaum ausgebildet sein. Insbesondere ist das elektrische Kernmaterial so ausgebildet, dass es kein Wasser bzw. Feuchtigkeit aufnimmt.

Die Stromlaufschiene kann an wenigstens einem Ende eine Kopplungsanordnung zur Kopplung mit einer weiteren Stromlaufschiene aufweisen. Insbesondere kann die Stromlaufschiene an beiden Enden eine Kopplungsanordnung aufweisen. Die Kopplungsanordnung dient zur mechanischen und elektrischen Kopplung mit einer weiteren Stromlaufschiene. Insbesondere kann die Kopplungsanordnung als Steckverbindung ausgebildet sein. Dadurch lassen sich zwei Stromlaufschienen besonders einfach miteinander verbinden. Die Kopplungsanordnung kann dazu Fixierbolzen, Spreizbolzen und/oder Bolzenaufnahmen aufweisen. Die Kopplungsanordnung kann Kopplungsblöcke umfassen, die stirnseitig in die Laufwagenführung eingebracht sind.

Weitere Vorteile ergeben sich, wenn an der Stromlaufschiene ein Wand- oder Deckenbefestigungsmittel angeordnet ist. Somit kann die Stromlaufschiene besonders einfach an einer Wand oder einer Decke eines Raums befestigt werden. Ein Laufwagen kann somit parallel zur Wand und/oder Decke bewegt werden. Die Wand- oder Deckenbefestigungsmittel können beispielsweise Gewindestangen aufweisen, sodass die Höhe der Anordnung der Stromlaufschiene besonders einfach variiert und eingestellt werden kann.

In den Rahmen der Erfindung fällt außerdem ein Stromlaufschienensystem mit zumindest einer erfindungsgemäßen Stromlaufschiene und einem Laufwagen, der Laufrollen aufweist, über die er entlang der Laufwagenführung bewegbar ist. An dem Laufwagen können elektrische Verbraucher angeordnet sein. Beispielsweise können an dem Laufwagen eine Steuerung, eine Vakuumpumpe und/oder ein Kompressor angeordnet sein, die über die Stromschienen und am Laufwagen angeordnete Stromabnehmer mit Energie versorgt werden können. Zu diesem Zweck weist der Laufwagen vorzugsweise zumindest einen Stromabnehmer auf, der die zumindest eine Stromschiene der Stromlaufschiene kontaktiert.

Gemäß einer vorteilhaften Ausgestaltung kann der Laufwagen angetrieben sein. Dies bedeutet, dass der Laufwagen einen eigenen elektrischen Antrieb aufweist, über den er entlang der Stromlaufschiene bewegt werden kann. Dadurch wird das Transportieren von Lasten erleichtert. Das Stromlaufschienensystem kann insbesondere als Hängebahnsystem ausgebildet sein.

Gemäß einer Ausgestaltung der Erfindung kann vorgesehen sein, dass der Laufwagen ein Gelenk aufweist, über das ein Ausleger mit dem Laufwagen koppelbar ist. Dadurch kann ein Ausleger drehbar mit dem Laufwagen verbunden werden. An dem Ausleger können verschiedene Energiequellen (Druckluft, Vakuum, Elektromotoren) ein- oder angebaut sein. Des Weiteren können Lastaufnahmen bzw. Hebehilfssysteme an dem Ausleger angeordnet sein und durch die Energiequellen mit Energie versorgt werden. Die elektrische Versorgung des Hebehilfssystems bzw. der Lastaufnahme kann über den Laufwagen erfolgen, der mit einem oder mehreren Stromabnehmern mit einer oder mehreren Stromschienen verbunden ist.

Besondere Stabilität erhält das Stromlaufschienensystem, wenn zumindest zwei Stromlaufschienen parallel beabstandet zueinander vorgesehen sind. Dadurch ist es möglich, einen Laufwagen auf die zwei parallel zueinander verlaufenden Stromlaufschienen aufzusetzen. Dadurch erhält der Laufwagen eine zusätzliche Stabilität und wird die Kraft reduziert, die auf die einzelnen Stromschienen wirkt. In diesem Fall ist es auch möglich, in jeder Stromlaufschiene lediglich eine Stromschiene vorzusehen. Eine Stromlaufschiene ist somit für positives Potential und eine Stromlaufschiene für negatives Potential vorgesehen. Der Laufwagen kann zwei Stromabnehmer aufweisen, die jeweils mit einer der Stromlaufschienen elektrisch leitend verbunden sind.

Gemäß einer Weiterbildung kann vorgesehen sein, dass die Stromlaufschienen über einen Verbinder starr miteinander verbunden sind. Der Verbinder kann dabei beispielsweise C-förmig ausgebildet sein. An diesem Verbinder können Befestigungen aller Art angebracht werden. Beispielsweise können die Stromlaufschienen, die über den Verbinder miteinander verbunden sind, wiederum über den Verbinder an einer Decke oder einer Wand montiert werden. Auch ist es möglich, weitere Komponenten des Stromlaufschienensystems an dem Verbinder zu befestigen. Durch den Verbinder werden die parallel zueinander beabstandeten Stromlaufschienen in einem konstanten Abstand gehalten.

Wenn zumindest zwei schräg zueinander angeordnete Stromlaufschienen vorgesehen sind und zwischen den schräg zueinander angeordneten Stromlaufschienen ein Drehkreuz angeordnet ist, kann ein Laufwagen in unterschiedlichen Richtungen bewegt werden. Dadurch ist es möglich, mit dem Laufwagen in einem Raum unterschiedliche Positionen anzufahren, die sich nicht nur geradlinig in einer Richtung befinden. Eine Längs- und Querbewegung des Laufwagens ist dadurch möglich. Besonders vorteilhaft ist es, wenn zumindest zwei Stromlaufschienen in einem rechten Winkel zueinander angeordnet sind.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine Schnittdarstellung durch eine Stromlaufschiene;
- Fig. 2a: abschnittsweise zwei Stromlaufschienen vor deren Kopplung;
- Fig. 2b: eine Detaildarstellung der Stromschienen der Stromlaufschienen der Fig. 2a, um deren Kopplung zu zeigen;
- Fig. 2c: Kopplungsanordnungen der Stromlaufschienen der Fig. 2a;
- Fig. 3: eine perspektivische Darstellung von zwei Stromlaufschienen, die parallel beabstandet zueinander miteinander verbunden sind;
- Fig. 4: ein Stromlaufschienensystem mit zwei Stromschienen und einem daran angeordneten Laufwagen;
- Fig. 5: eine Stromlaufschiene mit einem Teil des Laufwagens zur Darstellung der elektrischen Kopplung;
- Fig. 6: eine Seitenansicht eines Laufwagens, der an einer Stromtaufschiene angeordnet ist;
- Fig. 7: eine stark schematisierte Darstellung eines Stromlaufschienensystems.

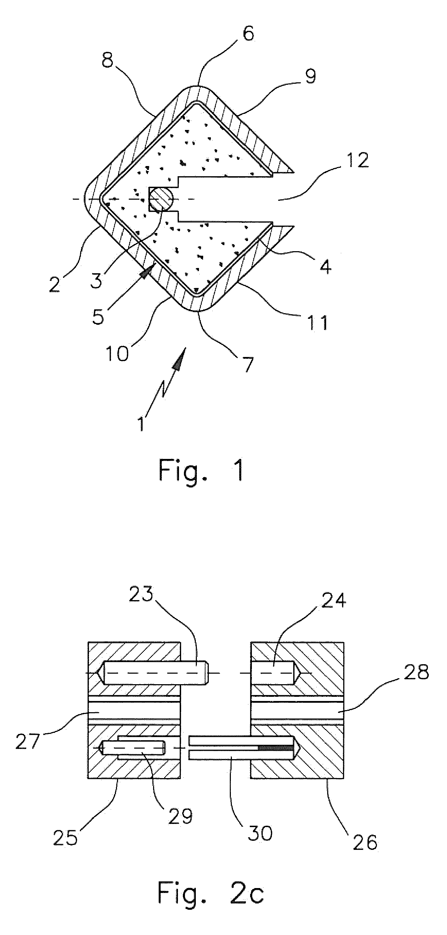

Die Fig. 1 zeigt eine Stromlaufschiene 1 mit einer Laufwagenführung 2, in der eine Stromschiene 3 angeordnet ist, wobei die Stromschiene 3 durch ein isolierendes Kernmaterial 4 elektrisch isoliert von der Laufwagenführung 2 angeordnet ist. Der Fig. 1 ist zu entnehmen, dass die Laufwagenführung 2 rohrartig ausgebildet ist, wobei der Innenraum 5 durch das isolierende Kernmaterial 4 ausgefüllt ist. In das isolierende Kernmaterial 4 ist die im Ausführungsbeispiel mit kreisrundem Querschnitt ausgebildete Stromschiene 3 eingebettet. Die Stromschiene 3 ist durch das isolierende Kernmaterial 4 an der Laufwagenführung 2 gehalten. Die Stromschiene 3 erstreckt sich in Längsrichtung der Stromlaufschiene 1 und insbesondere parallel zur Laufwagenführung 2.

Die Laufwagenführung 2 ist im Querschnitt viereckig ausgebildet, wobei die obere Kante 6 und die untere Kante 7 bzw. die daran angrenzenden Seitenflächen 8, 9 bzw. 10, 11 zur Führung von Laufrollen eines Laufwagens bestimmt sind. Die Laufwagenführung 2 weist im Ausführungsbeispiel an der rechten Längsseite einen Schlitz 12 auf, durch den die Stromschiene 3 für einen Stromabnehmer zugänglich ist. Daher ist auch in diesem Bereich das isolierende Kernmaterial 4 geschlitzt ausgebildet. Aufgrund der geometrischen Form und Orientierung der Laufwagenführung 2 ist diese sehr biegestabil ausgebildet. Die Stromschiene 3 ist im Inneren der Laufwagenführung 2 vor Feuchtigkeit geschützt angeordnet. Zur Herstellung der geschlitzten Laufwagenführung 2 kann einfach ein Vierkantrohr im Bereich einer Kante geöffnet werden, sodass der Schlitz 12 entsteht.

Sowohl die Laufwagenführung 2 als auch die Stromschiene 3 sind vorzugsweise aus Edelstahl ausgebildet.

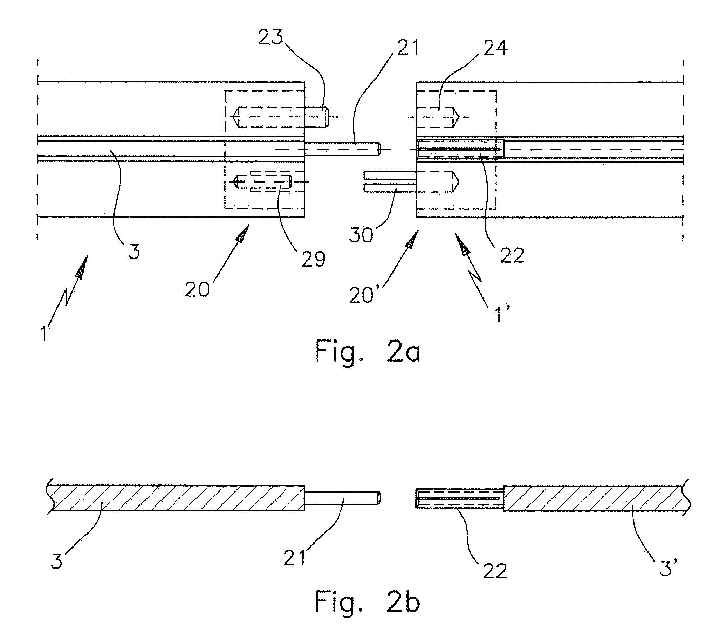

Die Fig. 2a zeigt, wie zwei Stromlaufschienen 1, 1` miteinander gekoppelt werden können. Hierzu weisen die Stromlaufschienen 1, 1' Koppelanordnungen 20, 20' auf, die als Steckverbindung ausgebildet sind. Die Stromschiene 3 der Stromlaufschiene 1, die auch in der Fig. 2b nochmals detailliert dargestellt ist, weist einen Fixierstift 21 auf, der einstückig mit der Stromschiene 3 ausgebildet oder daran angeschweißt sein kann. Die Stromschiene 3' der Stromlaufschiene 1' weist an einem Ende eine Spannhülse 22 auf, in die der Fixierstift 21 eingeschoben werden kann. Dadurch kann eine elektrische Verbindung der Stromlaufschienen 1, 1` erfolgen. Gleichzeitig wird hierdurch eine mechanische Verbindung realisiert.

Der Fixierstift 21 und die Spannhülse 22 können als Bestandteil der Koppelanordnungen 20 bzw. 20' aufgefasst werden.

Die Koppelanordnung 20 weist weiterhin einen Führungsstift 23 auf, der in eine entsprechende Führungsstiftaufnahme 24 der Koppelanordnung 20' eingesteckt werden kann. Hierdurch kann eine mechanische Verbindung erfolgen. Der Führungsstift 23 kann unmittelbar in das isolierende Kernmaterial 4 eingesteckt sein. Ebenfalls kann die Ausnehmung 24 in dem isolierenden Kernmaterial der Stromlaufschiene 1' ausgebildet sein. Grundsätzlich ist es auch denkbar, dass für die Koppelanordnungen 20, 20' separate Kopplungsblöcke 25, 26 vorgesehen sind, wie dies in der Fig. 2c gezeigt ist. Die Kopplungsblöcke 25, 26 können stirnseitig in die Stromlaufschienen 1, 1' eingesteckt sein. In diesem Fall ist der Fixierstift 23 in dem Kopplungsblock 25 und die Ausnehmung 24 in dem Kopplungsblock 26 angeordnet. Die Kopplungsblöcke 25, 26 weisen Durchgangsausnehmungen 27, 28 für die Stromschienen 3, 3' auf. Zur weiteren mechanischen Kopplung können die Kopplungsanordnungen 20, 20' einen Bolzen 29 aufweisen, der mit einem Spreizbolzen 30 der jeweils anderen Kopplungsanordnung zusammenwirkt, insbesondere in diesen eingesteckt werden kann. Entsprechend können Bolzen 29 und Spreizbolzen 30 auch an den Kopplungsblöcken 25, 26 vorgesehen sein, wie dies die Fig. 2c zeigt.

Im Ausführungsbeispiel sind unterschiedliche Kopplungsmittel 23, 24, 29, 30 gezeigt. Es ist auch denkbar, mehrmals gleichartige Kopplungsmittel zu verwenden. Beispielsweise kann die Kopplung nur über Fixierstift(e) 23 und Ausnehmung(en) 24 oder nur über Bolze(n) 29 und Spreizbolze(n) 30 erfolgen. Weiterhin kann vorgesehen sein, dass eine Stromlaufschiene an einem Ende eine Kopplungsanordnung 20 und am gegenüberliegenden Ende eine Kopplungsanordnung 20' aufweist.

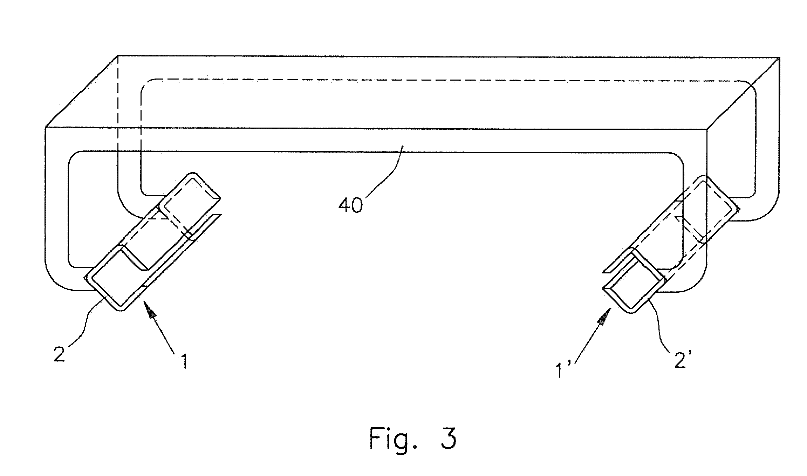

Die Fig. 3 zeigt in perspektivischer Ansicht zwei Laufwagenführungen 2, 2', die über einen C-förmigen Verbinder 40 miteinander verbunden sind. Durch den C-förmigen Verbinder 40 werden die Laufwagenführungen 2, 2' bzw. Stromlaufschienen 1, 1' starr miteinander verbunden. Insbesondere wird der Abstand der beiden parallel zueinander verlaufenden Stromlaufschienen 1, 1' festgelegt. An dem Verbinder können zusätzliche Elemente angeordnet werden. Insbesondere können auch die Stromlaufschienen 1, 1' über den Verbinder 40 an einem Gerüst, einer Konstruktion oder einer Decke befestigt werden. Der Verbinder 40 greift seitlich an den Stromlaufschienen 1, 1' an und zwar derart, dass ein Laufwagen dadurch nicht behindert wird. Insbesondere ist der Verbinder an den den Schlitzen gegenüberliegenden Seiten der Stromschiene 1, 1' befestigt.

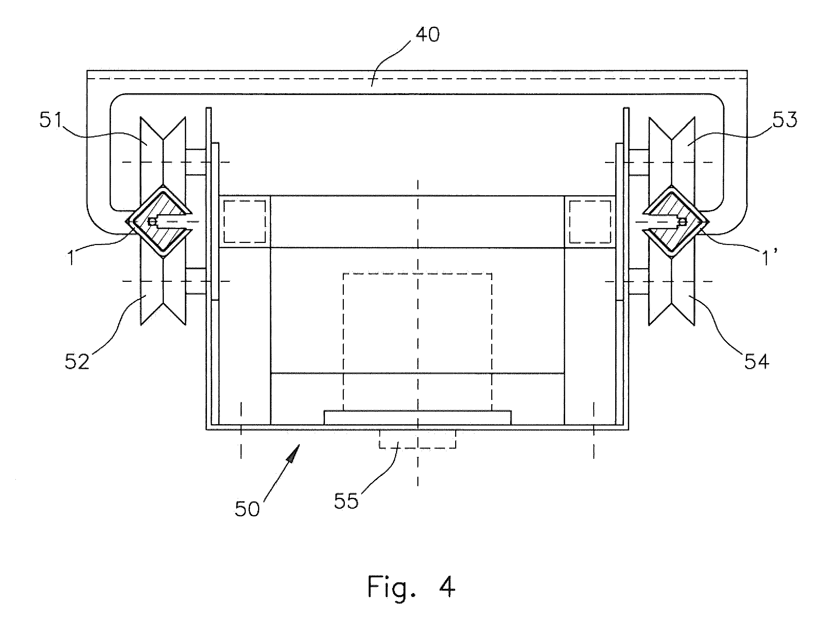

Die Fig. 4 zeigt die Anordnung der Fig. 3 mit einem Laufwagen 50. Der Laufwagen 50 weist Laufrollen 51, 52, 53, 54 auf, wobei die Laufrollen 51, 53 oben auf den Stromlaufschienen 1, 1' abrollen und die Laufrollen 52, 54 unten an den Stromlaufschienen 1, 1' abrollen. Dadurch, dass Laufrollen 51 - 54 sowohl über als auch unter den Stromlaufschienen 1, 1' angeordnet sind, ist eine besonders sichere und zuverlässige Führung gewährleistet. Insbesondere wird dadurch sichergestellt, dass der Laufwagen 50 nicht von den Stromlaufschienen 1, 1' springt. Hier ist auch zu erkennen, dass der C-förmige Verbinder 40 die Bewegung des Laufwagens 50 entlang der Stromlaufschienen 1, 1' nicht behindert. An dem Laufwagen 50 ist ein Gelenk 55 vorgesehen, an dem ein Ausleger schwenkbar befestigbar ist. Der Laufwagen 50 weist zwei gegenüberliegende Stromabnehmer auf, die in die Stromlaufschienen 1, 1' ragen und somit eine elektrische Versorgung von elektrischen Komponenten, die an dem Laufwagen 50 angeordnet sind, sicherstellen.

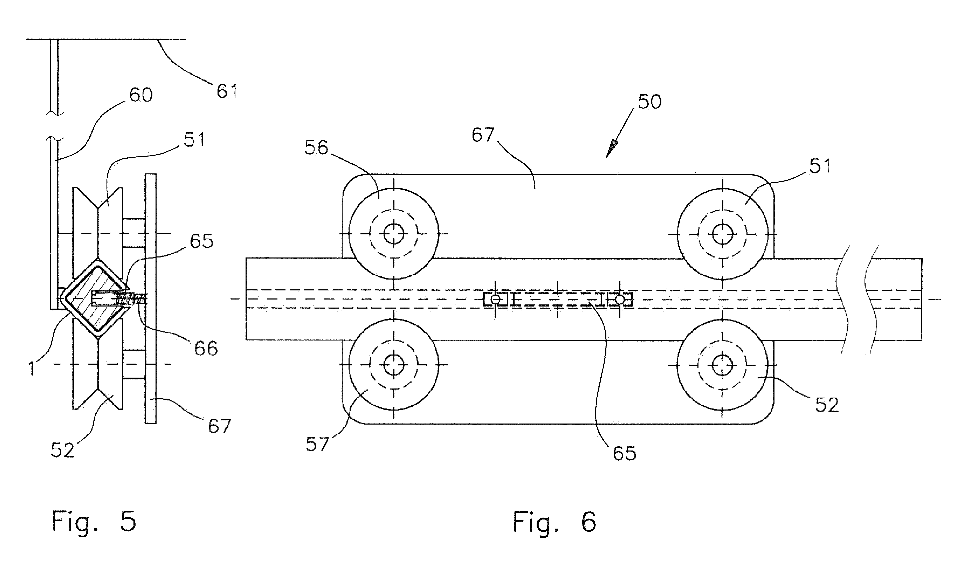

Die Fig. 5 zeigt eine Stromlaufschiene 1, die über ein Deckenbefestigungsmittel 60 mit einer Decke 61 verbunden ist. Das Deckenbefestigungsmittel 60 kann auch Bestandteil eines Verbinders 40 oder mit einem solchen verbunden sein. Hier ist zu erkennen, dass sich ein Stromabnehmer 65 über eine Feder 66 an einer Laufwagenplatte 67 abstützt, wodurch ein ständiger elektrischer Kontakt zu der Stromschiene 3 der Stromlaufschiene 1 sichergestellt wird. In der Fig. 5 ist lediglich ein Teil eines Laufwagens 50 bzw. ein Laufwagen dargestellt, der nur an einer Seite Laufrollen 51, 52 aufweist. Die Kontur der Laufrollen 51, 52 ist an die Kontur der Stromfaufschiene 1 angepasst, um eine möglichst gute Führung der Laufrollen 51, 52 auf der Stromlaufschiene 1 bzw. auf der Laufwagenführung zu gewährleisten.

Die Fig. 6 zeigt eine Seitenansicht eines Laufwagens 50 mit einer Laufwagenplatte 67. Hier ist zu erkennen, dass der Laufwagen 50 nicht nur die Laufrollen 51, 52, sondern auch noch weitere Laufrollen 56, 57 aufweist. Die Laufwagenplatte 67 ist geschlitzt ausgebildet. Durch den Schlitz kann der Stromaufnehmer 65 ragen.

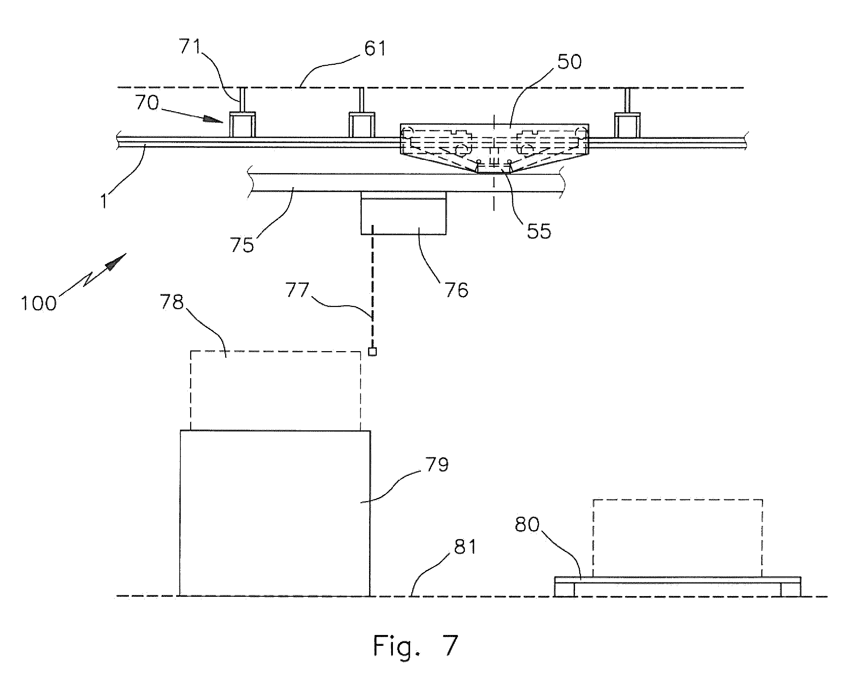

Die Fig. 7 zeigt ein erfindungsgemäßes Stromlaufschienensystem 100. Eine Stromlaufschiene 1 ist über Deckenbefestigungsmittel 70, die Gewindestangen 71 umfassen können, an einer Decke 61 eines Raums befestigt. Entlang der Stromlaufschiene 1 ist ein Laufwagen 50 bewegbar. An dem Gelenk 55 ist ein Ausleger 75 schwenkbar angeordnet. An dem Ausleger 75 wiederum ist ein Hebesystem 76 in Form eines Lastenaufzugs angeordnet. Die elektrische Versorgung des Hebesystems 76 erfolgt über die Stromaufnehmer des Laufwagens 50, die Strom von der Stromschiene der Stromlaufschiene 1 abnehmen. In dem Ausleger 75 können Kabel angeordnet sein. Weiterhin kann in dem Ausleger 75 ein Kabelschleppsystem vorhanden sein. Über einen Seilzug 77 des Hebesystems 76 können beispielsweise Lasten 78 von einer Waage 79 abgenommen werden und zu einer weiteren Position innerhalb des Raums transportiert werden, beispielsweise auf eine Palette 80, die auf dem Boden 81 steht. Um den Laufwagen 50 von der Stromlaufschiene 1 zu einer anderen Stromlaufschiene zu bewegen, die schräg zu der Stromtaufschiene 1 angeordnet ist, können nicht dargestellte Drehkreuze vorgesehen sein, durch die der Laufwagen 50 verdreht werden kann.

## Patentansprüche

1. Stromlaufschiene (1, 1') mit einer Laufwagenführung (2, 2') und zumindest einer elektrisch isoliert zur Laufwagenführung (2) angeordneten Stromschiene (3, 3'), die für einen Stromabnehmer (65) zugänglich ist.

2. Stromlaufschiene nach Anspruch 1, **dadurch gekennzeichnet, dass** die Laufwagenführung (2, 2') rohrartig ausgebildet ist, die zumindest eine Stromschiene (3, 3') im Innenraum (15) der rohrartigen Laufwagenführung (2, 2') angeordnet ist und die Laufwagenführung (2, 2') einen Längsschlitz (12) aufweist, durch den die zumindest eine Stromschiene (3, 3') für einen Stromabnehmer (65) zugänglich ist.

3. Stromlaufschiene nach Anspruch 2, **dadurch gekennzeichnet, dass** die rohrartige Laufwagenführung (2, 2') einen vieleckigen, insbesondere viereckigen, Querschnitt aufweist.

4. Stromlaufschiene nach Anspruch 2 oder 3, **dadurch gekennzeichnet, dass** der Längsschlitz (12) an der linken oder rechten Längsseite der Laufwagenführung (2, 2'), insbesondere im Bereich einer Kante der Laufwagenführung (2, 2'), angeordnet ist.

5. Stromlaufschiene nach einem der Ansprüche 2 bis 4, **dadurch gekennzeichnet, dass** der Innenraum (5) der Laufwagenführung (2, 2') mit einem elektrisch isolierenden Kernmaterial (4) ausgefüllt ist, in das die zumindest eine Stromschiene (3, 3') eingebettet ist.

6. Stromlaufschiene nach einem der vorhergehenden Ansprüche, **dadurch gekennzeichnet, dass** die Stromlaufschiene (1, 1') an wenigstens einem Ende eine Kopplungsanordnung (20, 20') zur Kopplung mit einer weiteren Stromlaufschiene (1, 1') aufweist.

7. Stromlaufschiene nach einem der vorhergehenden Ansprüche, **dadurch gekennzeichnet, dass** an der Stromlaufschiene (1, 1') ein Wand- oder Deckenbefestigungsmittel (60, 70) angeordnet ist.

8. Stromlaufschienensystem (100) mit zumindest einer Stromlaufschiene (1, 1') nach einem der vorhergehenden Ansprüche und einem Laufwagen (50), der Laufrollen (51 - 54, 56, 57) aufweist, über die er entlang der Laufwagenführung (2, 2') bewegbar ist.

9. Stromlaufschienensystem nach Anspruch 8, **dadurch gekennzeichnet, dass** der Laufwagen (50) zumindest einen Stromabnehmer (65) aufweist, der die zumindest eine Stromschiene (3, 3') der Stromlaufschiene (1, 1') kontaktiert.

10. Stromlaufschienensystem nach einem der vorhergehenden Ansprüche, **dadurch gekennzeichnet, dass** an dem Laufwagen (50) ein elektrischer Verbraucher angeordnet ist.

11. Stromlaufschienensystem nach einem der vorhergehenden Ansprüche, **dadurch gekennzeichnet, dass** der Laufwagen (50) angetrieben ist.

12. Stromlaufschienensystem nach einem der vorhergehenden Ansprüche, **dadurch gekennzeichnet, dass** der Laufwagen (50) ein Gelenk (55) aufweist, über das ein Ausleger (75) mit dem Laufwagen (50) koppelbar ist.

13. Stromlaufschienensystem nach einem der vorhergehenden Ansprüche 8 bis 12, **dadurch gekennzeichnet, dass** zumindest zwei Stromlaufschienen (1, 1') parallel beabstandet zueinander vorgesehen sind.

14. Stromlaufschienensystem nach Anspruch 13, **dadurch gekennzeichnet, dass** die Stromlaufschienen (1, 1') über einen Verbinder (40) starr miteinander verbunden sind.

15. Stromlaufschienensystem nach einem der vorhergehenden Ansprüche 8 bis 14, **dadurch gekennzeichnet, dass** zumindest zwei schräg zueinander angeordnete Stromlaufschienen (1, 1') vorgesehen sind und zwischen den schräg zueinander angeordneten Stromlaufschienen (1, 1') ein Drehkreuz angeordnet ist.
